# EUROPÄISCHE PATENTSCHRIFT

(11) **EP 2 516 090 B1**
(45) Veröffentlichungstag und Bekanntmachung des Hinweises auf die Patenterteilung: **14.09.2016**
(21) Anmeldenummer: 10801396.2
(22) Anmeldetag: 06.12.2010
(51) Int. Cl.: B23D 35/00

(54) **DOPPELBESÄUMSCHERE**
DOUBLE TRIMMING SHEARS
CISAILLE À ROGNER DOUBLE

(30) Priorität: 23.12.2009 DE 102009060253
(43) Veröffentlichungstag der Anmeldung: 31.10.2012
(73) Patentinhaber: SMS group GmbH, 40237 Düsseldorf (DE)
(72) Erfinder: BAUR, Thomas, 57271 Hilchenbach (DE); BOHN, Andreas, 57271 Hilchenbach (DE); MEINHARDT, Ulrich, 57271 Hilchenbach (DE)
(74) Vertreter: Klüppel, Walter
(86) Internationale Anmeldenummer: PCT/EP2010/068935
(87) Internationale Veröffentlichungsnummer: WO 2011/076548

(56) Entgegenhaltungen:
- FR-A- 1 475 574
- JP-U- 61 201 725
- US-A- 3 246 552

## Beschreibung

Die Erfindung betrifft eine Doppelbesäumschere, mit einem, ortsfesten Untermesser und einem heb- und senkbar angetriebenen Obermesser, wobei das Obermesser an einem mittels einer Schlittenführung geführten Obermesserschlitten angeordnet ist, wobei zur Führung der Schlittenführung eine erste Exzenterwelle und eine zweite Exzenterwelle an der Schlittenführung vorgesehen sind. Eine derartige Schere wird im FR 1475574 A gezeigt.

Doppelbesäumscheren werden üblicherweise dafür verwendet Metallbleche auf ihre endgültige Breite zu besäumen. Doppelbesäumscheren werden meist über Kurbelwellen angetrieben, welche jedoch nicht variabel in Bezug auf die Schnittbewegung einstellbar sind. Die Schlittenführung des Obermesserschlittens ist im oberen Bereich und im unteren Bereich jeweils an einer Exzenterwelle befestigt. Im unteren Bereich ist die Exzenterwelle üblicherweise durch einen Lenker gelagert. Mittels der im oberen Bereich vorgesehenen Exzenterwelle kann die Führung des Obermesserschlittens in der Höhe verstellt werden. Die Kopplung der Exzenterwelle im unteren Bereich mittels eines Lenkers bewirkt eine horizontale Verstellung der Schlittenführung. Wird die Schlittenführung des Obermesserschlittens im unteren Bereich getrennt von dem oberen Bereich über einen Lenker verstellt, kann dies zu einer unerwünschten Schrägstellung des Obermesserschlittens führen.

Der Erfindung liegt daher die Aufgabe zugrunde, eine Doppelbesäumschere zur Verfügung zu stellen, bei welcher eine Schrägstellung des Obermesserschlittens vermieden werden kann.

Die Lösung der Aufgabe erfolgt erfindungsgemäß durch die Merkmale des Anspruchs 1. Vorteilhafte Ausgestaltungen der Erfindung sind in den Unteransprüchen angegeben.

Die erfindungsgemäße Doppelbesäumschere weist ein ortsfestes Untermesser und ein heb- und senkbar angetriebenes Obermesser auf, wobei das Obermesser an einem mittels einer Schlittenführung geführten Obermesserschlitten angeordnet ist, wobei zur Führung der Schlittenführung eine erste Exzenterwelle und eine zweite Exzenterwelle an der Schlittenführung vorgesehen sind. Die Erfindung zeichnet sich dadurch aus, dass die erste Exzenterwelle und die zweite Exzenterwelle über ein Synchronisierungsmittel miteinander verbunden sind.

Dadurch, dass erfindungsgemäß kein Lenker mehr an einer der Exzenterwellen vorgesehen ist, sondern die Exzenterwellen nunmehr über ein Synchronisierungsmittel miteinander verbunden sind, so dass diese eine zueinander synchronisierte Bewegung ausführen (können), ist eine parallele Verstellung des Obermesserschlittens bzw. der Schlittenführung des Obermesserschlittens in Querrichtung oder horizontale Richtung sichergestellt, die es ermöglicht, einen geeigneten Messerspalt zum Besäumen eines Bleches einzustellen. Eine Schrägstellung des Obermesserschlittens bzw. der Schlittenführung wird dadurch verhindert.

Nach einer vorteilhaften Ausgestaltung der Erfindung ist das Synchronisierungsmittel als eine starre Stange ausgebildet. Dadurch, dass das Synchronisierungsmittel als eine starre, nicht verbiegbare Stange ausgebildet ist, ist eine exakte parallele Führung bzw. Verstellbewegung der ersten und der zweiten Exzenterwelle zueinander möglich, wobei gleichzeitig über das starre Synchronisierungsmittel ein auf die beiden Exzenterwellen ausgeübter Druck gleichmäßig auf die beiden Exzenterwellen verteilt wird.

Weiter ist es bevorzugt vorgesehen, dass das Synchronisierungsmittel drehbeweglich an der ersten Exzenterwelle und drehbeweglich an der zweiten Exzenterwelle gelagert ist. Durch die drehbewegliche Lagerung des Synchronisierungsmittels an den beiden Exzenterwellen kann das Synchronisierungsmittel den Bewegungen der Exzenterwellen folgen und diese aufeinander gezielt abstimmen und die Bewegung der einen Exzenterwelle auf die jeweils andere Exzenterwelle übertragen.

Die erste Exzenterwelle ist bevorzugt an einem ersten Ende der Schlittenführung und die zweite Exzenterwelle ist bevorzugt an einem dem ersten Ende gegenüberliegenden zweiten Ende der Schlittenführung angeordnet. Die erste Exzenterwelle und die zweite Exzenterwelle sind dabei vorzugsweise in Schnittrichtung des Obermessers an dem ersten Ende und dem zweiten Ende angeordnet. Dadurch, dass an jeweils einem Ende eine Exzenterwelle vorgesehen ist, ist eine gleichmäßige Führung und Bewegung der Schlittenführung bzw. des Obermessers entlang der Schnittrichtung möglich, wodurch eine besonders optimierte parallele Verstellung der Schlittenführung in Querrichtung oder horizontaler Richtung entlang der Schnittrichtung erzielbar ist. Dadurch ist eine verbesserte Schnittgüte durch eine senkrechte Führung und Ausstellung des Obermesserschlittens im kompletten Bereich der Messerspaltverstellung erzielbar.

Weiter sind die erste Exzenterwelle und die zweite Exzenterwelle vorteilhafterweise in Schnittrichtung des Obermessers entlang der Schlittenführung hintereinander, versetzt zueinander angeordnet. Dadurch, dass die erste Exzenterwelle und die zweite Exzenterwelle in Schnittrichtung des Obermessers entlang der Schlittenführung hintereinander, versetzt zueinander angeordnet sind, kann eine optimale Verstellung der Schlittenführung erreicht werden. Mögliche Schrägstellungen können hierdurch besser ausgeglichen werden. Versetzt zueinander bedeutet hierbei, dass die erste und die zweite Exzenterwelle derart an der Schlittenführung angeordnet sind, dass die erste Exzenterwelle vorzugsweise einen geringeren Abstand zu dem Obermesserschlitten aufweist als die zweite Exzenterwelle zu dem Obermesserschlitten.

Ferner betrifft die Erfindung eine Scherenlinie umfassend eine wie vorstehend aus- und weitergebildete Doppelbesäumschere.

Nachfolgend wird die Erfindung unter Bezugnahme auf die anliegenden Zeichnungen anhand einer bevorzugten Ausführungsform näher erläutert.

Es zeigen:
- Fig. 1: eine schematische Schnitt-Darstellung einer erfindungsgemäßen Doppelbesäumschere in einer ersten Position;
- Fig. 2: eine schematische Schnitt-Darstellung der erfindungsgemäßen Doppelbesäumschere in einer zweiten Position; und
- Fig. 3: eine schematische Schnitt-Darstellung der erfindungsgemäßen Doppelbesäumschere in einer dritten Position.

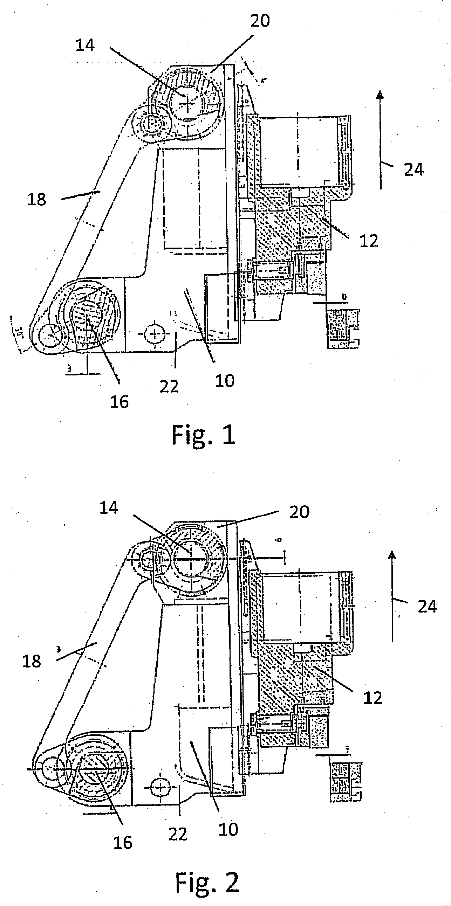

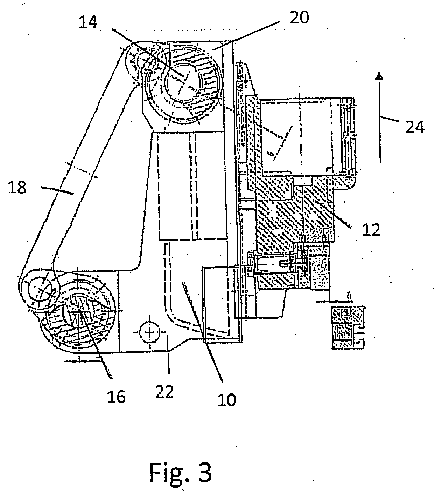

In den Fig. 1 bis 3 ist eine erfindungsgemäße Doppelbesäumschere in verschiedenen Positionen gezeigt. Die Doppelbesäumschere weist ein ortsfestes Untermesser und ein heb- und senkbar angetriebenes Obermesser auf, hier nicht gezeigt, wobei das Obermesser an einem mittels einer Schlittenführung 10 geführten Obermesserschlitten 12 angeordnet ist. Zur Führung der Schlittenführung 10 sind an der Schlittenführung 10 eine erste Exzenterwelle 14 und eine zweite Exzenterwelle 16 vorgesehen, wobei die erste Exzenterwelle 14 und die zweite Exzenterwelle 16 über ein Synchronisierungsmittel 18 miteinander verbunden sind. Dadurch können die erste Exzenterwelle 14 und zweite Exzenterwelle 16 eine zueinander synchronisierte Bewegung ausüben und bewirken dadurch eine parallele Verstellung des Obermesserschlittens 12 in horizontaler oder Querrichtung zur Einstellung eines Messerspaltes, insbesondere des Messerspaltes des Obermessers.

Das Synchronisierungsmittel 18 ist in Form einer starren Stange ausgebildet, welche drehbeweglich an der ersten Exzenterwelle 14 und an der zweiten Exzenterwelle 16 gelagert ist, was anhand der Fig. 1 bis 3 aufgrund der hier gezeigten unterschiedlichen Verdrehpositionen der Exzenterwellen 14, 16 bzw. des Synchronisierungsmittel 18 erkennbar ist.

Die erste Exzenterwelle 14 ist an einem ersten Ende 20 der Schlittenführung 10 und die zweite Exzenterwelle 16 ist an einem dem ersten Ende 20 gegenüberliegenden zweiten Ende 22 der Schlittenführung 10 angeordnet. Dabei sind die erste Exzenterwelle 14 und die zweite Exzenterwelle 16 in Schnittrichtung 24 des Obermessers entlang der Schlittenführung 10 hintereinander, versetzt zueinander angeordnet, wobei der Abstand der ersten Exzenterwelle 14 zu dem Obermesserschlitten 12 in Querrichtung oder horizontaler Richtung kleiner ist als in Querrichtung oder horizontaler Richtung der Abstand der zweiten Exzenterwelle 16 zu dem Obermesserschlitten 12.

## Patentansprüche

1. Doppelbesäumschere mit einem ortsfesten Untermesser und einem heb- und senkbar angetriebenen Obermesser, wobei das Obermesser an einem mittels einer Schlittenführung (10) geführten Obermesserschlitten (12) angeordnet ist und an der Schlittenführung (1) zu ihrer Führung einer erste Exzenterwelle (14) vorgesehen ist, wobei die erste Exzenterwelle (14) an einem in Schnittrichtung (24) ersten Ende (20) an der Schlittenführung (10) angeordnet ist und dass an der Schlittenführung (10) an einem in Schnittrichtung (24) dem ersten Ende (20) gegenüberliegenden zweiten Ende (22) der Schlittenführung (10) eine zweite Exzenterwellen (16) angeordnet ist, **dadurch gekennzeichnet, dass** die erste Exzenterwelle (14) und die zweite Exzenterwelle (16) über ein einen ausgeübten Druck gleichzeitig und gleichmäßig auf die erste und die zweite Exzenterwelle (14, 18) verteilendes Synchronisierungsmittel (18) miteinander verbunden sind, welches als starre, nicht verbiegbare Stange ausgebildet und drehbeweglich an der ersten Exzenterwelle (14) und drehbeweglich an der zweiten Exzenterwelle (16) gelagert ist.

2. Doppelbesäumschere nach Anspruch 1, **dadurch gekennzeichnet, dass** die erste Exzenterwelle (14) und die zweite Exzenterwelle (16) in Schnittrichtung (24) des Obermessers entlang der Schifttenführung (10) hintereinander, versetzt zueinander angeordnet sind.

3. Scherenlinie mit einer Doppelbesäumschere nach einem der Ansprüche 1 oder 2.

## Claims

1. Double trimming shears with a stationary lower knife and an upper knife driven to be raisable and lowerable, wherein the upper knife is arranged at an upper knife carriage (12) guided by means of a carriage guide (10), and a first eccentric shaft (14) is provided at the carriage guide (10) for guidance thereof, wherein the first eccentric shaft (14) is arranged at the carriage guide (10) at an end (20) which is first in cutting direction (24), and a second eccentric shaft (16) is arranged at the carriage guide (10) at a second end (22), which is opposite the first end (20) in cutting direction (24), of the carriage guide (10), **characterised in that** the first eccentric shaft (14) and the second eccentric shaft (16) are connected together by way of synchronising means (18) which apportions an exerted pressure simultaneously and equally to the first and second eccentric shafts (14, 16) and which is constructed as a rigid, non-bendable rod and is mounted on the first eccentric shaft (14) to be rotationally movable and on the second eccentric shaft (16) to be rotationally movable.

2. Double trimming shears according to claim 1, **characterised in that** the first eccentric shaft (14) and the second eccentric shaft (16) are arranged in succession in cutting direction (24) of the upper knife along the carriage guide (10) and offset relative to one another.

3. Shearing line with double trimming shears according to one of claims 1 and 2.

## Revendications

1. Cisaille de rives à double lame comprenant une lame inférieure fixe et une lame supérieure entraînée apte à s'élever et à s'abaisser, la lame supérieure étant disposée contre un chariot de lame supérieur (12) guidé au moyen d'un guidage de chariot (10) et un premier arbre à excentrique (14) pour son guidage le long du guidage de chariot (1), le premier arbre à excentrique (14) étant disposé à une première extrémité (20) dans la direction de cisaillement (24) contre le guide de chariot (10) et un deuxième arbre à excentrique (16) étant disposé contre le guidage de chariot (10) à une deuxième extrémité (22) du guidage de chariot (10), opposée à la première extrémité (20), dans la direction de cisaillement (24), **caractérisée en ce que** le premier arbre à excentrique (14) et le deuxième arbre à excentrique (16) sont reliés l'un à l'autre via un moyen de synchronisation (18) répartissant une pression exercée de manière simultanée et de manière uniforme sur le premier et sur le deuxième arbre à excentrique (14, 16), ledit moyen étant réalisé sous la forme d'une barre rigide non flexible et étant monté en rotation contre le premier arbre à excentrique (14) et en rotation contre le deuxième arbre à excentrique (16).

2. Cisaille de rives à double lame selon la revendication 1, **caractérisée en ce que** le premier arbre à excentrique (14) et le deuxième arbre à excentrique (16) sont disposés, dans la direction de cisaillement (24) de la lame supérieure, le long du guidage de chariot (10), l'un derrière l'autre, en décalage l'un par rapport à l'autre.

3. Ligne de cisaillement comprenant une cisaille de rives à double lame selon l'une quelconque des revendications 1 ou 2.
